# EUROPEAN PATENT SPECIFICATION

(11) **EP 2 103 789 B1**
(45) Date of publication and mention of the grant of the patent: **27.10.2010**
(21) Application number: 09154687.9
(22) Date of filing: 10.03.2009
(51) Int. Cl.: F01P 11/20, F02N 19/10

(54) **Warming-up system for vehicle**
Aufwärmsystem für ein Fahrzeug
Système de chauffage pour véhicule

(30) Priority: 19.03.2008 JP 2008071037
(43) Date of publication of application: 23.09.2009
(73) Proprietor: Honda Motor Co., Ltd., Minato-ku Tokyo 107-8556 (JP)
(72) Inventor: Kudo, Tomohide, Saitama 351-0193 (JP); Ohashi, Tatsuyuki, Tokyo 107-8556 (JP); Yatabe, Fumio, Saitama 351-0193 (JP); Fukushima, Shinya, Saitama 351-0193 (JP)
(74) Representative: Rupp, Christian

(56) References cited:
- DE-A1- 2 927 680
- DE-A1- 4 427 256
- DE-C- 819 334
- GB-A- 2 424 474
- JP-A- 2006 240 501
- JP-A- 2006 316 775
- US-A1- 2002 112 679

## Description

### CROSS-REFERENCE TO RELATED APPLICATION

The present disclosure relates to subject matter contained in Japanese Patent Application No. 2008-071037, filed on March 19, 2008, the disclosure of which is expressly incorporated herein by reference in its entirety.

### BACKGROUND OF THE INVENTION

1. Field of the Invention

The present invention relates to a warming-up system for vehicle provided with a heat storage device capable of carrying out early warming-up of an internal combustion engine, a transmission and the like or immediate heating of an inside of a vehicle.

2. Description of the Related Art

Heretofore, as shown in Japanese Patent Application Publication No. 10-71837 and 2002-39335 (hereinafter, respectively referred to as "Patent Document 1" and "Patent Document 2"), for example, it is known a warming-up system for vehicle provided with a heat storage device that carries out warming-up of an internal combustion engine (hereinafter, referred to as an "engine") or an automatic transmission by means of heat storage. A heat storage device (heat storage tank) disclosed in Patent Document 1 uses cooling water for the engine as a heat storage medium. In the heat storage device, a heat storage medium is housed in a container having high adiabaticity. Further, a heat storage device disclosed in Patent Document 2 has a structure wherein a passage in which hydraulic oil for an automatic transmission flows is covered with a heat storage medium layer made of a high heat-capacity material such as ceramic and magnesium oxide. By using the warming-up system provided with such a heat storage device, it is possible to effectively carry out early warming-up of the engine or the automatic transmission at the starting of a vehicle or immediate heating of the inside of the vehicle.

Now, in the warming-up system disclosed in Patent Document 1, in addition to the above heat storage device, a so-called heat exchanger for warming up a drive system, which carries out heat exchange between hydraulic oil for the automatic transmission and cooling water for the engine, and a heater core of an in-vehicle heating apparatus are provided separately. Thus, there have been a problem that the number of parts for the overall warming-up system becomes large and a problem that its structure becomes complicated and gets bigger, thereby increasing costs thereof. This causes obstruction to compactification and weight saving of a vehicle.

Further, the heat storage device disclosed in Patent Document 1 uses cooling water for the engine as the heat storage medium. However, in the case where temperature of the cooling water is lowered, heat storage cannot be held and stored heat is released to the outside. For that reason, in order to prevent the stored heat from escaping to the outside of the device, there is need to cause a container receiving the heat storage medium to have high adiabaticity. However, there has been a fear that this causes complicated of a structure of the heat storage device, whereby the device becomes a large scale and it leads to high production costs and increase in weight. A further warming up system is shown in DE 4 427 256.

### SUMMARY OF THE INVENTION

The present invention is made in view of the above points, and it is an object of the present invention to provide a warming-up system for vehicle capable of effectively carrying out early warming-up of a warming-up target and/or immediate heating of an inside of a vehicle while achieving simplification, miniaturization and weight saving of a structure thereof.

In order to achieve the above object, a warming-up system for vehicle (1) according to the present invention includes the features of claim 1.

Further, it is preferable that the warming-up system for vehicle further includes a control section (50) for controlling a warming-up operation to the first or second warming-up target (30, 44, 40), and that the control section (50) determines whether warming-up for the first or second warming-up target (30, 44, 40) is required or not when the control section (50) receives an instruction of warming-up for the first or second warming-up target (30, 44, 40). In this case, in the case where warming-up is not required, the control section (50) prohibits or suppresses the warming-up operation to the first or second warming-up target (30, 44, 40). Further, it is preferable that the control section (50) determines whether the warming-up for the first or second warming-up target (30, 44, 40) is required or not on the basis of at least one of temperature of the first heat transfer medium and temperature of the second heat transfer medium.

Alternatively, the warming-up system for vehicle may further include: an electric pump (42) for causing the first or second heat transfer medium to circulate, the electric pump (42) being installed in the first or second heat transfer medium circuit (31, 41); a control section (50) for controlling a warming-up operation to the first or second warming-up target (30, 44, 40); and a remotely instructing section (53) capable of remotely instructing the control section (50) from the outside of a vehicle. In this case, when the control section (50) receives the instruction of warming-up for the first or second warming-up target (30, 44, 40) from the remotely instructing section (53), the control section (50) activates the electric pump (42) and causes the release device (25) to release the supercooled state of the heat storage element (20).

Further, in the heat storage device of the above warming-up system for vehicle, the second chamber (16, 76) is adjacent to the third chamber (17, 77) and the third chamber (17, 77) is adjacent to the first chamber (15, 75). This makes it possible to carry out heat exchange directly between the heat storage element and the second heat transfer medium (hydraulic oil), and to carry out heat exchange directly between the first heat transfer medium (cooling water) and the second heat transfer medium (hydraulic oil). Therefore, not only heat generated in the heat storage element, but also heat generated in the internal combustion engine can be used for warming-up of a drive system effectively.

Alternatively, in the heat storage device of the above warming-up system for vehicle, the first chamber (15) may be adjacent to the second chamber (16) and the second chamber (16) may be adjacent to the third chamber (17). This makes it possible to carry out heat exchange directly between the heat storage element and the first heat transfer medium (cooling water), and to carry out heat exchange directly between the heat storage element and the second heat transfer medium (hydraulic oil). Therefore, since heat generated in the heat storage element can be supplied to both the first and second heat transfer medium (cooling water and hydraulic oil) effectively, it is possible to effectively carry out early warming-up of the internal combustion engine and the transmission.

Further, a heater core (45) of a heating apparatus (44) for heating the inside of a vehicle using heat of the first or second heat transfer medium may be placed at a downstream side of the heat storage device (10) in the first or second heat transfer medium circuit (31, 41). This makes it possible to achieve heating of the inside of the vehicle using the first heat transfer medium (cooling water) heated with the heat storage of the heat storage element. Further, according to this warming-up system, the first heat transfer medium (cooling water) derived from the heat storage device can be sent to the heating apparatus by means of the first heat transfer medium circuit (cooling water circuit), and the second heat transfer medium (hydraulic oil) derived from the heat storage device can be sent to the transmission by means of the second heat transfer medium circuit (hydraulic oil circuit). Therefore, it is possible to carry out in-vehicle heating and warming-up of the transmission using heat storage of the heat storage element at the same time.

Alternatively, the heat storage device (10) may be constructed integrally with the heater core (45) of the heating apparatus (44) for heating the inside of the vehicle. Thus, by integrating the heat storage device with the heater core of the heating apparatus, it is possible to achieve reduction of the number of parts, miniaturization and weight saving of the device. Further, by using heat storage of the heat storage element, in-vehicle heating can be carried out independent of temperature of the first heat transfer medium (cooling water). Therefore, it is possible to carry out immediate heating of the inside of the vehicle even before or right after starting of the internal combustion engine.

According to the warming-up system for vehicle of the present invention, it is possible to effectively carry out early warming-up of a warming-up target and immediate heating of the inside of the vehicle while achieving simplification of a structure, miniaturization and weight saving of the heat storage device.

### BRIEF DESCRIPTION OF THE DRAWINGS

The foregoing and other objects, features and advantages of the present invention will become more readily apparent from the following detailed description of preferred embodiments of the present invention that proceeds with reference to the appending drawings:

FIG. 1 is a schematic view showing a constituent example of a warming-up system for vehicle according to a first embodiment of the present invention;

FIG. 2 is a view showing a constituent example of an electronically-controlled thermostat valve;

FIG. 3A is an exploded perspective view showing a constituent example of a heat storage device, and FIG. 3B is a sectional view taken along the line A-A of FIG. 3A;

FIG. 4 is a schematic view showing other constituent example of the heat storage device;

FIG. 5 is a view showing a constituent example of a nucleation device;

FIG. 6 is a view showing a constituent example of a heat storage device provided with a chemical heat storage medium;

FIG. 7 is a graph showing a timing chart of an operation mode of the warming-up system;

FIG. 8 is a main flowchart showing control procedures of the warming-up system;

FIG. 9 is a flowchart for explaining operation mode switching procedures;

FIG. 10 is a flowchart for explaining procedures of Mode 0;

FIG. 11 is a flowchart for explaining procedures of Mode 1;

FIG. 12 is a flowchart for explaining procedures of Mode 2;

FIG. 13 is a flowchart for explaining procedures of Mode 3;

FIG. 14 is a schematic view showing a constituent example of a warming-up system for vehicle according to a second embodiment of the present invention;

FIG. 15 is a perspective view showing a constituent example of a heat storage device of the second embodiment;

FIG. 16 is an exploded perspective view showing a constituent example of the heat storage device of the second embodiment; and

FIG. 17A is a sectional view taken along the line C-C of FIG. 15, and FIG. 17B is a partially enlarged view of a heat exchange and heat storage tube.

### DETAILED DESCRIPTION OF THE INVENTION

Hereinafter, embodiments of the present invention will be described in detail with reference to the accompanying drawings.

<First Embodiment>

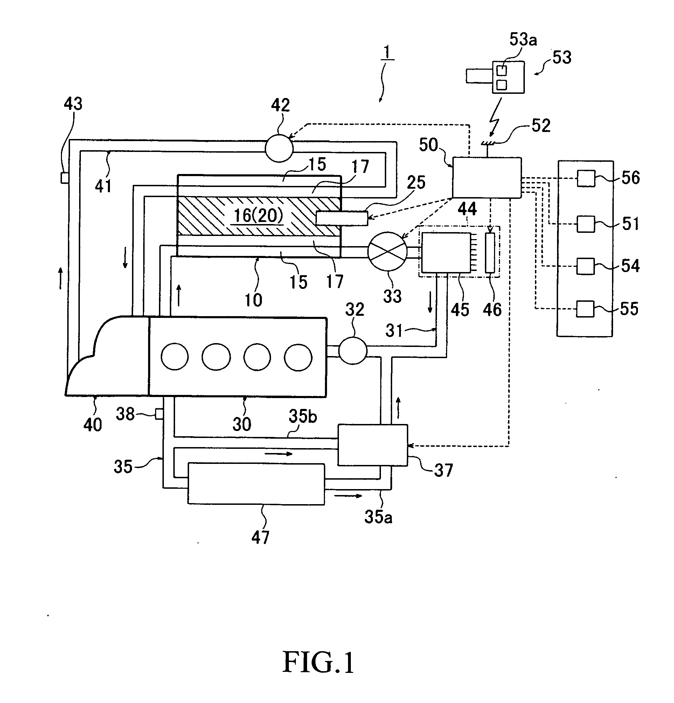

FIG. 1 is a schematic view showing a constituent example of a warming-up system for vehicle provided with a heat storage device according to a first embodiment of the present invention. A warming-up system for vehicle 1 includes a heat storage device 10, a cooling water circuit (first heat transfer medium circuit) 31 and a hydraulic circuit (second heat transfer medium circuit) 41. The heat storage device 10 has a heat storage medium (heat storage element) 20. The cooling water circuit 31 causes cooling water (LLC: long life coolant, first heat transfer medium) for an engine (first warming-up target) 30 to circulate through the heat storage device 10 and a heater core 45 of an in-vehicle heating apparatus 44. The hydraulic circuit 41 causes hydraulic oil (ATF: automatic transmission fluid, second heat transfer medium) for an automatic transmission (AT, second warming-up target) 40 to circulate through the heat storage device 10. The cooling water circuit 31 is derived from a water jacket (not shown in the drawings) formed in the engine 30, is in communication with the heat storage device 10, passes through the heater core 45 at a downstream side of the heat storage device 10, and is again introduced into the water jacket of the engine 30. A cooling water pump 32 is placed at a position just before a position where the cooling water circuit 31 is introduced into the engine 30. The cooling water pump 32 is adapted to drive in conjunction with rotation of a crank shaft (not shown in the drawings) of the engine 30. Further, a hydraulic oil pump (electric pump) 42 for causing the hydraulic oil to circulate and an oil temperature sensor 43 for detecting temperature of the hydraulic oil are installed in the hydraulic circuit 41. Although detailed configuration will be described later, the heat storage device 10 includes a first chamber 15 in communication with the cooling water circuit 31, a second chamber 16 in which the heat storage medium 20 is placed, and a third chamber 17 in communication with the hydraulic circuit 41.

Although detailed illustration is omitted, the heater core 45 is placed in an air induction duct facing the inside of a vehicle. A blower fan 46 for fanning the heater core 45 is built into the air induction duct. An electronic control unit (hereinafter, referred to as "ECU", or control section) 50 is adapted to control operation of the blower fan 46. A blower duct in communication with the inside of the vehicle is provided at a blower downstream side of the heater core 45.

Further, a heating switch 51 for heating the inside of the vehicle and a defroster switch 55 for blowing warm air from a defroster outlet are provided on a control panel (not shown in the drawings) in the vehicle. An ON/OFF signal of each of the heating switch 51 and the defroster switch 55 is outputted to the ECU 50. Therefore, the blower fan 46 operates in accordance with the ON signal of the heating switch 51 or the defroster switch 55. The blower fan 46 is adapted to send air in the vehicle drawn through the air induction duct to the inside of the vehicle from the blower duct through the heater core 45 again. Further, the warming-up system 1 includes an outside temperature sensor 54 for detecting outside temperature. A detected signal of the outside temperature sensor 54 is outputted to the ECU 50. An operational signal for an ignition switch (hereinafter, referred to as "IG switch") 56 is sent to the ECU 50.

A switching valve (on-off valve) 33 is placed between the heat storage device 10 in the cooling water circuit 31 and the heater core 45. The switching valve 33 switches opening and closing of the cooling water circuit 31. Opening and closing of the switching valve 33 are controlled in accordance with a signal from the ECU 50. Hereinafter, a state where the witching valve 33 is turned OFF indicates a state where the switching valve 33 is opened to cause the cooling water to flow into the heat storage device 10 and the heater core 45, and a state where the switching valve 33 is turned ON indicates a state where the switching valve 33 is closed to cause the cooling water not to flow into the heat storage device 10 and the heater core 45.

Further, a radiator circuit (a circuit for a radiator) 35 for causing the cooling water for the engine 30 to circulate through a radiator 47 is provided in the warming-up system for vehicle 1. The radiator circuit 35 is derived from the water jacket of the engine 30, and joins an upstream side of the cooling water pump 32 in the cooling water circuit 31. A bypass passage 35b for bypassing the radiator 47 and a main passage 35a in communication with the radiator 47 is provided in the radiator circuit 35. An electronically-controlled thermostat valve (three-way valve) 37 is placed at a meeting point of a downstream side of the radiator 47 between the bypass passage 35b and the main passage 35a. An opening/closing direction of the electronically-controlled thermostat valve 37 is controlled in accordance with a signal from the ECU 50. Further, a water temperature sensor 38 for detecting temperature of the cooling water is installed in the radiator circuit 35. The signal detected by the water temperature sensor 38 is adapted to be outputted to the ECU 50.

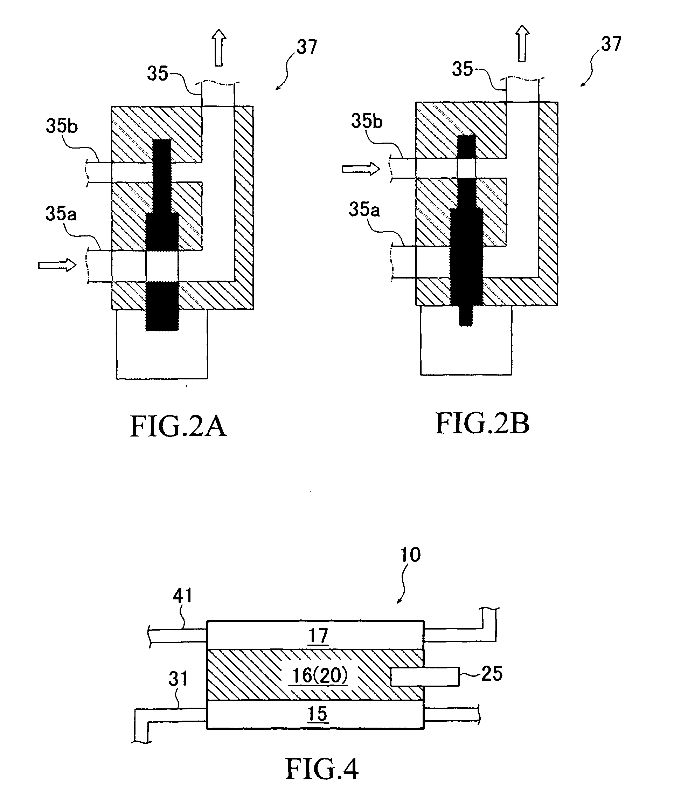

FIG. 2 is a view showing a constituent example of the electronically-controlled thermostat valve 37. Hereinafter, a state where the electronically-controlled thermostat valve 37 is turned OFF indicates a state shown in FIG. 2A, that is, a state where the main passage 35a is opened and the bypass passage 35b is closed, and a state where the electronically-controlled thermostat valve 37 is turned ON indicates a state shown in FIG. 2B, that is, a state where the main passage 35a is closed and the bypass passage 35b is opened.

In the case where the temperature of the cooling water detected by the water temperature sensor 38 is lower than predetermined temperature (for example, 100°C), the ECU 50 controls the cooling water not to flow into the radiator 47 by turning the electronically-controlled thermostat valve 37 ON. On the other hand, in the case where the temperature of the cooling water becomes predetermined temperature (for example, 110°C) or higher, the ECU 50 controls to introduce the cooling water to the radiator 47 by turning the electronically-controlled thermostat valve 37 OFF.

A receiving device 52 capable of communicating with an external device by wireless is connected to the ECU 50. Thus, the ECU 50 is adapted to be able to remotely receive an ON/OFF signal of a warm-up switch 53a provided in an engine start key (remotely instructing section) 53. Therefore, in the case where a driver or a passenger operates the warm-up switch 53a of the engine start key 53 outside the vehicle, the signal from the engine start key 53 is received via the receiving device 52 by the ECU 50, and the ECU 50 can issue a warm-up instruction to the warming-up system 1.

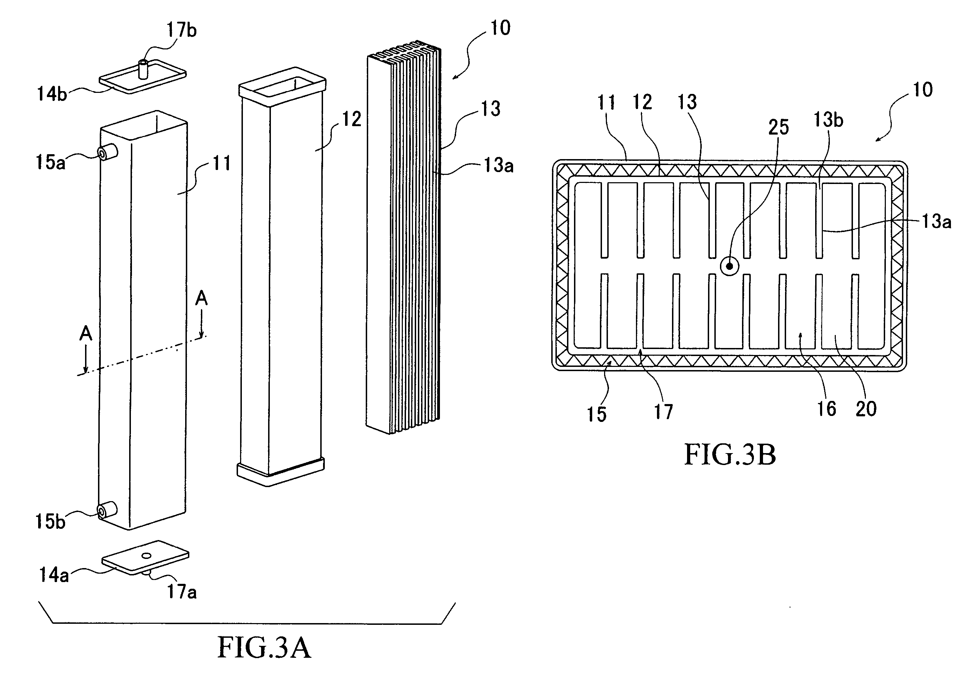

FIG. 3 is a view showing a detailed configuration of the heat storage device 10. FIG. 3A is an exploded perspective view thereof, and FIG. 3B is a sectional view taken along the line A-A of FIG. 3A. The heat storage device 10 has a triplex structure including a case 11 composed of a longitudinal tubular element, an intermediate member 12 provided inside the case 11 and composed of a tubular element having a smaller diameter than that of the case 11, and a partition member 13 provided inside the intermediate member 12. The partition member 13 has a plurality of fins 13a. Each of the fins 13a has a plate-like shape extending along a longitudinal direction of the case 11. The fins 13a are arranged in a horizontal direction (lateral direction) thereof at predetermined intervals. As shown in FIG. 3B, a gap 13b in communication with the outside of the partition member 13 is provided between the two adjacent fins 13a. A space between the case 11 and the intermediate member 12 constitutes the first chamber 15 into which the cooling water for the engine 30 is introduced. A space between the intermediate member 12 including the gaps 13b of the fins 13a and the partition member 13 constitutes the third chamber 17 into which the hydraulic oil for the automatic transmission 40 is introduced. The inside of the partition member 13 constitutes the second chamber 16 in which the heat storage medium 20 is filled at a sealed state.

Cover members 14a, 14b are attached to openings provided at upper and lower ends of the case 11. A hydraulic oil inlet 17a for introducing the hydraulic oil into the third chamber 17 is provided on the cover member 14a of the lower end. A hydraulic oil outlet 17b for deriving the hydraulic oil therefrom is provided on the cover member 14b of the upper end. Further, a cooling water inlet 15a for introducing the cooling water into the first chamber 15 is provided on a side surface near the upper end of the case 11. A cooling water outlet 15b for deriving the cooling water therefrom is provided on the side surface near the lower end of the case 11.

In this heat storage device 10, the second chamber 16 and the third chamber 17 are arranged to be adjacent to each other, and the third chamber 17 and the first chamber 15 are arranged to be adjacent to each other. Therefore, heat exchange can be carried out directly between the heat storage medium 20 in the second chamber 16 and the hydraulic oil in the third chamber 17, and heat exchange can be carried out directly between the hydraulic oil in the third chamber 17 and the cooling water in the first chamber 15. In this regard, heat exchange can also be carried out between the cooling water in the first chamber 15 and the heat storage medium 20 in the second chamber 16 indirectly via the hydraulic oil in the third chamber 17.

FIG. 4 is a schematic view showing other constituent example of the heat storage device 10. In a heat storage device 10 shown in FIG. 4, a first chamber 15 and a second chamber 16 are arranged to be adjacent to each other, and the second chamber 16 and a third chamber 17 are arranged to be adjacent to each other. The heat storage device 10 can be configured in such a manner. This makes it possible to heat exchange directly between the cooling water and the heat storage medium 20, and to heat exchange directly between the hydraulic oil and the heat storage medium 20. Therefore, heat storage of the heat storage medium 20 allows both the hydraulic oil and the cooling water to be directly heated. In this case, heat exchange can also be carried out between the cooling water in the first chamber 15 and the hydraulic oil in the third chamber 17 indirectly via the heat storage medium 20 in the third chamber 17.

The case 11 has durability such as corrosion prevention against the cooling water, and is made of a material having good adiabaticity, for example, a metallic material such as copper, aluminum and stainless. In this case 11, a vacuum heat-insulating layer may be formed therein because adiabaticity thereof is improved, but illustration of the layer is omitted. Further, each of the intermediate member 12 and the partition member 13 has durability against the cooling water, the hydraulic oil and the heat storage medium 20, and may be made of a material having relatively higher thermal conductivity, for example, a metallic material such as stainless.

The heat storage medium 20 is a latent heat storage medium capable of heat storage at a supercooled state, and has a property that it remains a liquid form and does not become solidified even when it becomes a freezing point or lower. A heat storage medium made of sodium acetate hydrate is mentioned as the heat storage medium 20, for example. Sodium acetate hydrate can generate heat when it returns to an equilibrium state to be solidified by release of a supercooled state by means of a release device (will be described later), and can thereby heat other medium having low temperature.

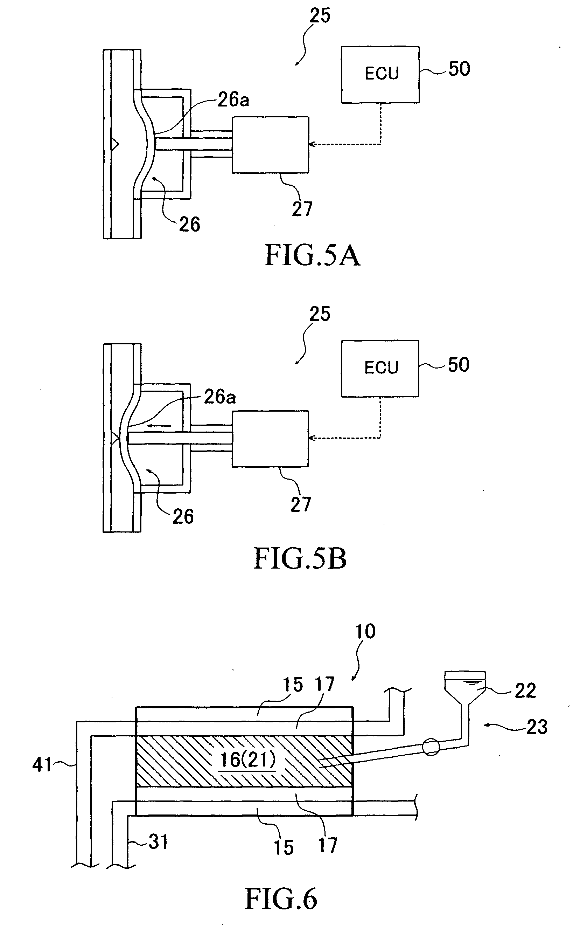

A release device (hereinafter, referred to as a "nucleation device") 25 for releasing a supercooled state of the heat storage medium 20 is placed in the heat storage medium 20 in the second chamber 16. FIG. 5 is a schematic side view showing the nucleation device 25. The nucleation device 25 includes a metallic spring member 26 installed in the heat storage medium 20 and a solenoid 27 for applying a shock to the metallic spring member 26. The metallic spring member 26 is a circular-shaped plate. The solenoid 27 operates in accordance with an instruction from the ECU 50. When a central portion 26a of the metallic spring member 26 is pressed by a shock of the solenoid 27 in a state shown in FIG. 5A, the central portion 26a is reversed as shown in FIG. 5B. Thus, once a core is generated (nucleate) in the heat storage medium 20, the supercooled state of the heat storage medium 20 is released to start solidification. In this regard, the release device may be any device so long as it can generate a core in the heat storage medium 20. In addition to the above one, the release device may be a device that can provide friction of metal, application of voltage or the like in the heat storage medium 20, for example.

Here, although sodium acetate hydrate has been mentioned as a representative example of the latent heat storage medium that can store heat at a supercooled state, hydrated salts (expressed by Mx.nH₂O (n: integer number) as chemical formula) can be mentioned in addition, and Na2SO₄.10H₂O and CaCl₂.6H₂O can be exemplified.

Further, the heat storage medium may be composed of a chemical heat storage medium that can absorb and release heat using chemical reaction (chemical change). As such a chemical heat storage medium, there is a heat storage medium made of zeolite, for example. FIG. 6 is a view showing a constituent example of a heat storage device 10 provided with a heat storage medium 21 made of zeolite. In this case, a heat storage device 10 is constructed so as to include a reaction medium supplying section (chemical change inducing section) 23 that causes heat storage medium 21 made of zeolite to induce chemical reaction (chemical change) by supplying water 22 as a reaction medium thereto. In this heat storage device 10, heat exchange with the cooling water or the hydraulic oil causes zeolite to be heated and dewatered when the engine 30 operates, thereby storing heat in the heat storage medium 21. On the other hand, at the starting of the engine 30, water 22 is supplied to the heat storage medium 21 from the reaction medium supplying section 23 to be absorbed, thereby causing the heat storage medium 21 to generate absorption heat to heat the cooling water or the hydraulic oil. As the chemical heat storage medium, in addition to zeolite, there are silica gel, activated carbon, burnt lime and the like, for example. As the reaction medium that can induce the chemical reaction, in addition to water, there are ethanol, methanol, ethylene glycol series antifreeze, potassium chloride series antifreeze and the like. Further, as an example of the chemical heat storage medium, in addition, a heat storage medium using hydrogen storing alloy and the like may be mentioned.

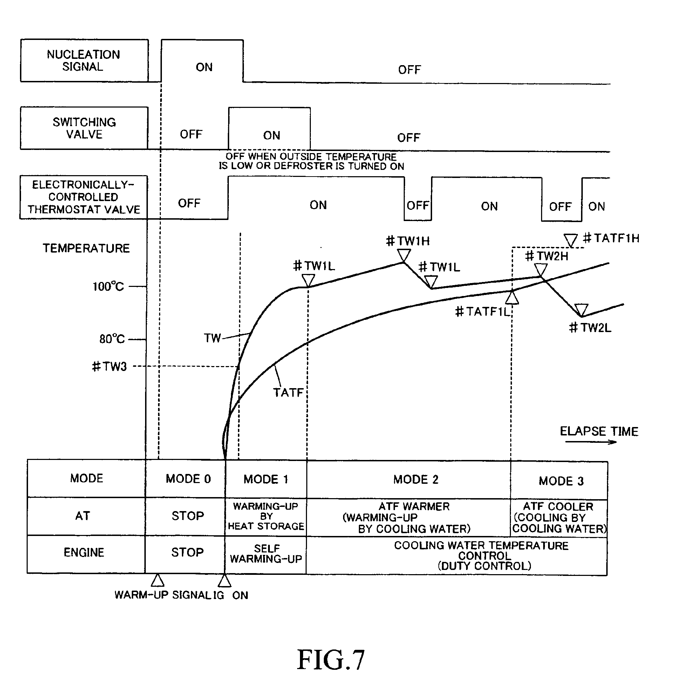

FIG. 7 is a graph showing a timing chart of an operation mode in the warming-up system 1 having the configuration described above. As shown in FIG. 7, an operation mode of the warming-up system 1 is switched in four steps from Mode 0 to Mode 3. Mode 0 is a mode while the engine 30 is stopped. Mode 1 is a mode from the time when the IG switch 56 is turned ON to start the engine 30 to the time when temperature of the cooling water reaches predetermined temperature. The hydraulic oil for the automatic transmission 40 is heated by the heat storage medium 20 during Mode 1. The engine 30 is also warming up itself. Mode 2 is a mode after the time when temperature of the cooling water reaches the predetermined temperature to the time when it is determined that temperature of the hydraulic oil reaches the predetermined temperature to complete warming-up of the automatic transmission 40. The hydraulic oil for the automatic transmission 40 is heated by the cooling water for the engine 30 during Mode 2. Further, the cooling water for the engine 30 is controlled (DUTY control) by opening and closing control of the electronically-controlled thermostat valve 37 so as to keep a predetermined temperature range. Mode 3 is a mode after it is determined that warming-up of the automatic transmission 40 has been completed. The hydraulic oil for the automatic transmission 40 is cooled by the cooling water for the engine 30 during Mode 3. Further, the cooling water for the engine 30 is controlled by the opening and closing control of the electronically-controlled thermostat valve 37 so as to keep the predetermined temperature range in the similar manner to Mode 2.

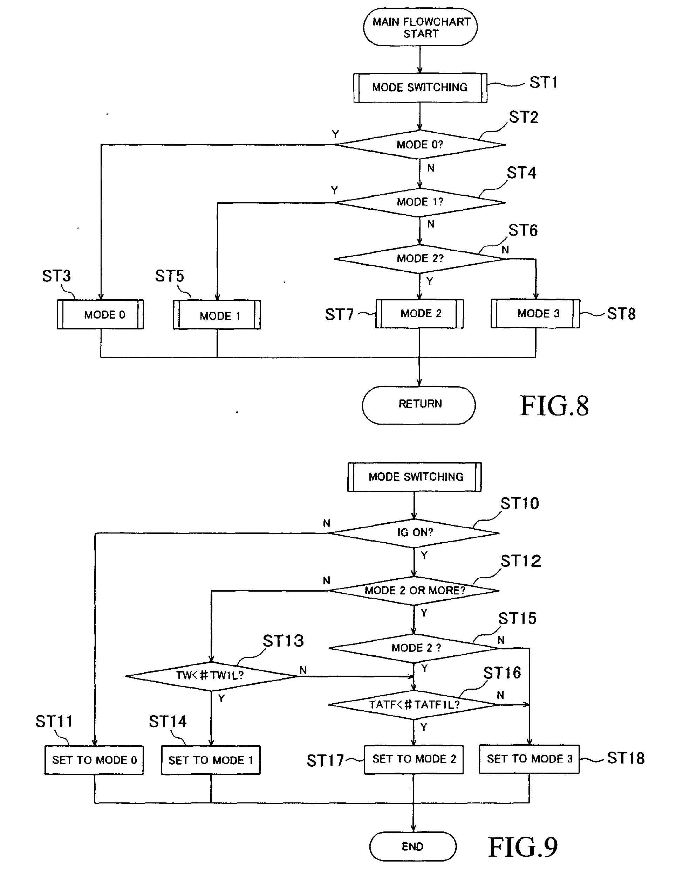

FIG. 8 is a main flowchart showing control procedures of the warming-up system 1. In these control procedures, a subroutine of mode switching (will be described later) is first carried out (Step ST1). It is determined whether the set mode is Mode 0 or not on the basis of the result (Step ST2). In the case where it is determined that the mode is Mode 0 (Y), a subroutine of Mode 0 is carried out (Step ST3). In the case where it is determined that the mode is not Mode 0 (N), it is determined whether the mode is Mode 1 or not (Step ST4). As a result, in the case where it is determined that the mode is Mode 1 (Y), a subroutine of Mode 1 is carried out (Step ST5). In the case where it is determined that the mode is not Mode 1 (N), it is determined whether the mode is Mode 2 or not (Step ST6). As a result, in the case where it is determined that the mode is Mode 2 (Y), a subroutine of Mode 2 is carried out (Step ST7). In the case where it is determined that the mode is not Mode 2 (N), a subroutine of Mode 3 is carried out (Step ST8).

FIG. 9 is a flowchart for explaining mode switching procedures. In the mode switching, it is first determined whether the IG switch 56 is turned ON or not (Step ST10). As a result, in the case where it is determined that the IG switch 56 is not turned ON (N), the mode is set to Mode 0 (Step ST11). In the case where the IG switch 56 is turned ON (Y), it is determined whether or not the mode is Mode 2 or more (Step ST12). In the case where it is determined that the mode is not Mode 2 or more (N), it is determined whether cooling water temperature TW is lower than #TW1L or not (Step ST13). In the case where it is determined that the cooling water temperature TW is lower than #TWLL (Y), the mode is set to Mode 1 (Step ST14). A concrete example of #TW1L is 100°C. Further, in the case where it is determined at foregoing Step ST12 that the mode is Mode 2 or more (Y), it is subsequently determined whether the mode is Mode 2 or not (Step ST15). In the case where it is determined that the mode is Mode 2 (Y), or in the case where it is determined at foregoing Step ST13 that the cooling water temperature TW is #TWLL or higher (N), it is determined whether or not hydraulic oil temperature TATF is lower than #TATFIL (Step ST16). A concrete example of #TATF1L is 100°C. As a result, in the case where it is determined that the hydraulic oil temperature TATF is lower than #TATF1L (Y), the mode is set to Mode 2 (Step ST17). In the case where it is determined that the hydraulic oil temperature TATF is #TATF1L or higher (N), the mode is set to Mode 3 (Step ST18). Further, in the case where it is determined at foregoing Step ST15 that the mode is not Mode 2 (N), the mode is set to Mode 3 (Step ST18).

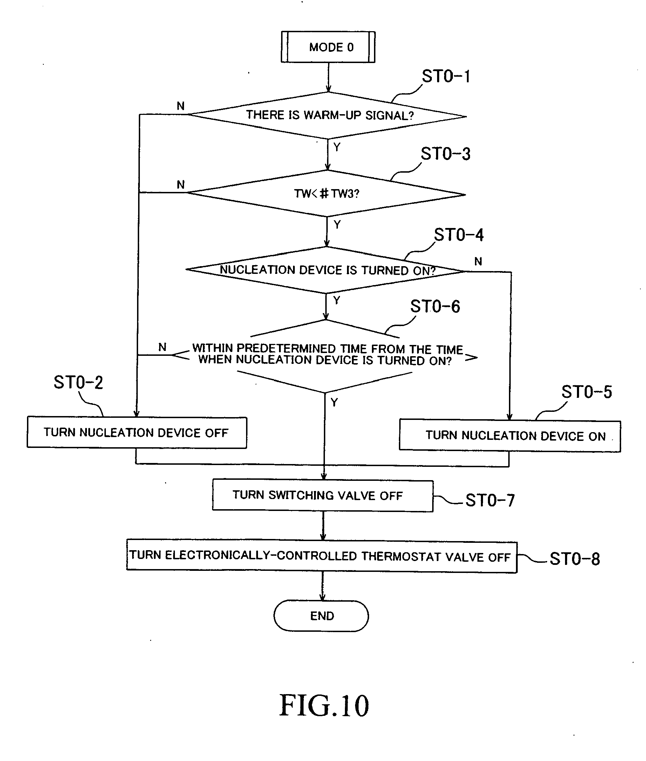

FIG. 10 is a flowchart for explaining procedures of Mode 0. In Mode 0, it is first determined whether there is input of a warm-up signal or not (Step ST0-1). As a result, in the case where it is determined that there is no warm-up signal (N), the nucleation device 25 is turned OFF (Step ST0-2). On the other hand, in the case where it is determined that there is a warm-up signal (Y), it is determined whether the cooling water temperature TW is lower than #TW3 or not (Step ST0-3). A concrete example of #TW3 is 60°C. As a result, in the case where it is determined that the cooling water temperature TW is #TW3 or higher (N), the nucleation device 25 is turned OFF (Step ST0-2). Namely, in the case where it is determined that the cooling water temperature is sufficient high at the starting, it is determined that warming-up of the engine 30 or the automatic transmission 40 by means of the heat storage device 10 is not required, the heat storage medium 20 is not nucleated, and self warming-up of the heat storage device 10 is not carried out. On the other hand, in the case where it is determined that the cooling water temperature TW is lower than #TW3 (Y), it is determined whether the nucleation device 25 is turned ON or not (Step ST0-4). As a result, in the case where it is determined that the nucleation device 25 is turned OFF (N), the nucleation device 25 is turned ON (Step ST0-5). In the case where it is determined that the nucleation device 25 is turned ON (Y), it is determined whether it is within the predetermined time from the time when the nucleation device 25 is turned ON or not (Step ST0-6). As a result, in the case where it is determined that it is not within the predetermined time (N), that is, in the case where the predetermined time or more elapses since the nucleation device 25 has been turned ON, the nucleation device 25 is turned OFF (Step ST0-2). Further, in this Mode 0, the switching valve 33 is kept OFF (Step ST0-7), and the electronically-controlled thermostat valve 37 is kept OFF (Step ST0-8). The procedures of Mode 0 are then terminated, and the processing flow is returned to the main flowchart.

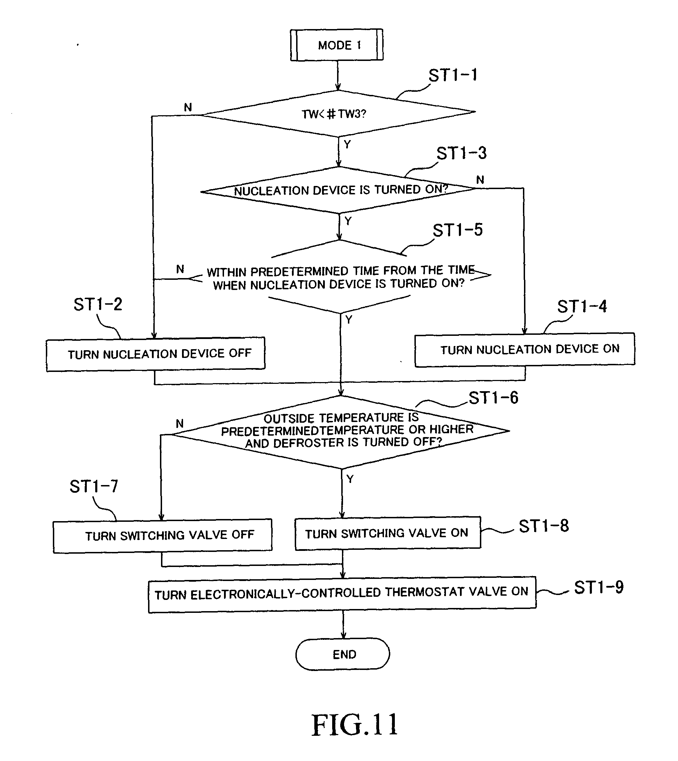

FIG. 11 is a flowchart for explaining procedures of Mode 1. In Mode 1, it is first determined whether the cooling water temperature TW is lower than #TW3 or not (Step ST1-1). As a result, in the case where it is determined that the cooling water temperature TW is #TW3 or higher (N), the nucleation device 25 is turned OFF (Step ST1-2). Namely, in the case where it is determined that the cooling water temperature is sufficient high at the starting, it is determined that warming-up of the engine 30 or the automatic transmission 40 by means of the heat storage device 10 is not required, the heat storage medium 20 is not nucleated, and heating of the cooling water or the hydraulic oil by means of the heat storage medium 20 is not carried out. On the other hand, in the case where it is determined that the cooling water temperature TW is lower than #TW3 (Y), it is determined whether the nucleation device 25 is turned ON or not (Step ST1-3). As a result, in the case where it is determined that the nucleation device 25 is not turned ON (N), the nucleation device 25 is turned ON (Step ST1-4). In the case where it is determined that the nucleation device 25 is turned ON (Y), it is determined whether it is within the predetermined time from the time when the nucleation device 25 is turned ON (Step ST1-5). As a result, in the case where it is determined that it is not within the predetermined time (N), that is, in the case where the predetermined time or more elapses since the nucleation device 25 has been turned ON, the nucleation device 25 is turned OFF (Step ST1-2). Subsequently, it is determined whether or not outside temperature is predetermined temperature or higher and the defroster switch 55 is turned OFF (Step ST1-6). As a result, in the case where it is determined that the outside temperature is the predetermined temperature or lower or the defroster switch 55 is turned ON (N), the switching valve 33 is turned OFF (Step ST1-7), and the cooling water derived from the heat storage device 10 is thereby caused to flow into the heater core 45. Namely, in this case, heating of the inside of the vehicle by the heat storage device 10 is carried out while warming-up of the automatic transmission 40 by the heat storage device 10 is carried out. On the other hand, in the case where the outside temperature is the predetermined temperature or higher and the defroster switch 55 is turned OFF (Y), the switching valve 33 is turned ON (Step ST1-8), and the cooling water derived from the heat storage device 10 is thereby caused not to flow into the heater core 45. Namely, in this case, warming-up of the automatic transmission 40 by the heat storage device 10 is carried out by priority, but heating of the inside of the vehicle is not carried out. Further, in Mode 1, the electronically-controlled thermostat valve 37 is kept ON (Step ST1-9), and the cooling water is early warmed by causing the cooling water not to flow into the radiator 47. The procedures of Mode 1 are then terminated, and the processing flow is returned to the main flowchart.

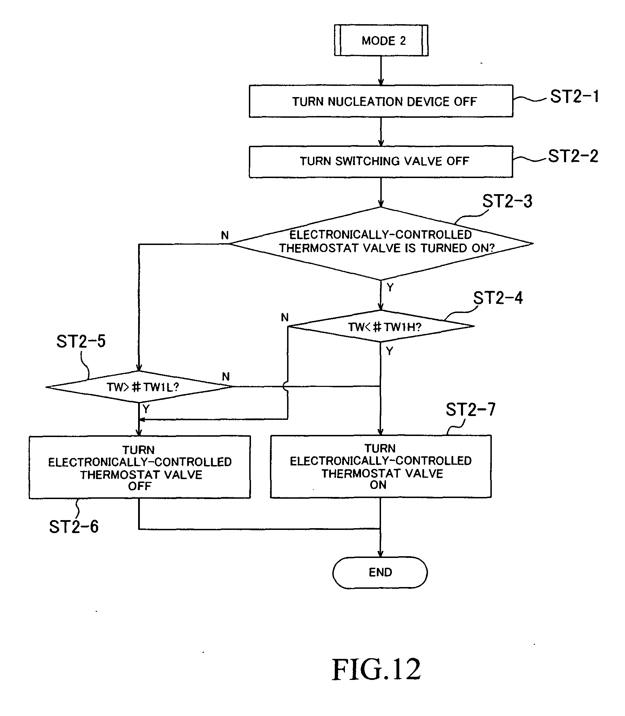

FIG. 12 is a flowchart for explaining procedures of Mode 2. In Mode 2, the nucleation device 25 is turned OFF (Step ST2-1). Moreover, the switching valve 33 is turned OFF (Step ST2-2), whereby the cooling water from the heat storage device 10 is caused to flow into the heater core 45. It is then determined whether the electronically-controlled thermostat valve 37 is turned ON or not (Step ST2-3). As a result, in the case where it is determined that it is turned ON (Y), it is determined whether the cooling water temperature TW is lower than #TW1H or not (Step ST2-4). A concrete example of #TW1H is 105°C. As a result, in the case where it is determined that the cooling water temperature TW is #TW1H or higher (N), the electronically-controlled thermostat valve 37 is turned OFF (Step ST2-6), whereby the cooling water is caused to flow into the radiator 47. On the other hand, in the case where it is determined that the cooling water temperature TW is lower than #TW1H (Y), the electronically-controlled thermostat valve 37 is kept ON (Step ST2-7), and the cooling water is thereby caused not to flow into the radiator 47. Further, in the case where it is determined at foregoing Step ST2-3 that the electronically-controlled thermostat valve 37 is turned OFF (N), it is determined whether the cooling water temperature TW is higher than #TW1L or not(Step ST2-5). As a result, in the case where it is determined that the cooling water temperature TW is higher than #TW1L (Y), the electronically-controlled thermostat valve 37 is kept OFF (Step ST2-6). In the case where it is determined that the cooling water temperature TW is #TW1L or lower (N), the electronically-controlled thermostat valve 37 is turned ON (Step ST2-7). Then, the processing flow is returned to the beginning to repeat the above procedures. Namely, in Mode 2, in the case where it is determined that the cooling water temperature TW rises to #TW1H or higher, cooling by the radiator 47 is carried out. In the case where it is determined that the cooling water temperature TW falls to #TW1L or lower, cooling by the radiator 47 is stopped. Thus, the ECU 50 controls so that the cooling water temperature TW always falls within a range between #TW1L and #TW1H, as shown in FIG. 7.

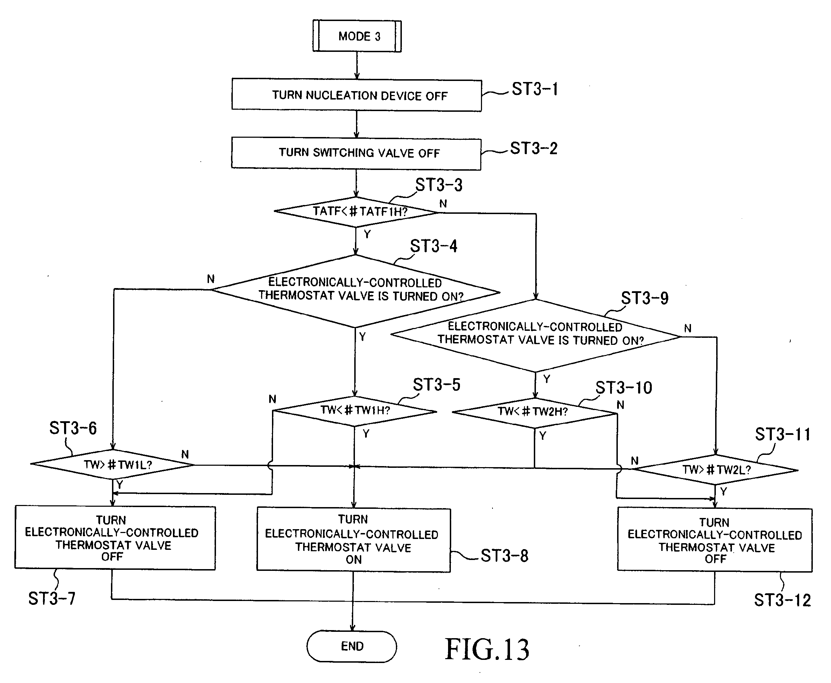

FIG. 13 is a flowchart for explaining procedures of Mode 3. In Mode 3, the nucleation device 25 is turned OFF (Step ST3-1). Further, the switching valve 33 is turned OFF (Step ST3-2), and the cooling water derived from the heat storage device 10 is thereby caused to flow into the heater core 45. Then, it is determined whether the hydraulic oil temperature TATF is lower than #TATF1H or not (Step ST3-3). A concrete example of #TATF1H is 110°C. As a result, in the case where it is determined that the hydraulic oil temperature TATF is lower than #TATF1H (Y), it is determined whether the electronically-controlled thermostat valve 37 is turned ON or not (Step ST3-4). In the case where it is determined that the electronically-controlled thermostat valve 37 is turned ON (Y), it is determined whether the cooling water temperature TW is lower than #TW1H or not (Step ST3-5). In the case where it is determined that the cooling water temperature TW is #TW1H or higher (N), the electronically-controlled thermostat valve 37 is turned OFF (Step ST3-7). In the case where it is determined that the cooling water temperature TW is lower than #TW1H (Y), the electronically-controlled thermostat valve 37 is turned ON (Step ST3-8). On the other hand, in the case where it is determined at foregoing Step ST3-4 that the electronically-controlled thermostat valve 37 is not turned ON (N), it is determined whether the cooling water temperature TW is higher than #TW1L or not (Step ST3-6). As a result, in the case where it is determined that the cooling water temperature TW is higher than #TW1L (Y), the electronically-controlled thermostat valve 37 is turned OFF (Step ST3-7). In the case where it is determined that the cooling water temperature TW is #TW1L or lower (N), the electronically-controlled thermostat valve 37 is turned ON (Step ST3-8). Namely, in the case where it is determined that the hydraulic oil temperature TATF of the automatic transmission 40 falls within a narrow range (TATF < #TATF1H: 110°C), there is no need to lower the cooling water temperature TW further. Therefore, the ECU 50 controls so that the cooling water temperature TW falls within a so-called fuel consumption target range (#TW1L: 100°C < TW < #TW1H: 105°C) for fuel cost priority.

On the other hand, in the case where it is determined at foregoing Step ST3-3 that the hydraulic oil temperature TATF is #TATF1H or higher (N), it is determined whether the electronically-controlled thermostat valve 37 has been turned ON already (Step ST3-9). In the case where it is determined that it has been turned ON (Y), it is determined whether the cooling water temperature TW is lower than #TW2H or not (Step ST3-10). A concrete example of #TW2H is 85°C. In the case where it is determined that the cooling water temperature TW is #TW2H or higher (N), the electronically-controlled thermostat valve 37 is turned OFF (Step ST3-12). In the case where it is determined that the cooling water temperature TW is lower than #TW2H (Y), the electronically-controlled thermostat valve 37 is turned ON (Step ST3-8). On the other hand, in the case where it is determined at foregoing Step ST3-9 that the electronically-controlled thermostat valve 37 has not been turned ON yet (N), it is determined whether the cooling water temperature TW is higher than #TW2L or not (Step ST3-11). A concrete example of #TW2L is 80°C. As a result, in the case where it is determined that the cooling water temperature TW is higher than #TW2L (Y), the electronically-controlled thermostat valve 37 is turned OFF (Step ST3-12). In the case where it is determined that the cooling water temperature TW is #TW2L or lower (N), the electronically-controlled thermostat valve 37 is turned ON (Step ST3-8). Namely, in the case where it is determined that the hydraulic oil temperature TATF of the automatic transmission 40 is too high compared with the narrow range (TATF < #TATF1H: 110°C), there is need to keep the cooling water temperature TW for the engine 30 low. Therefore, the ECU 50 controls so that the cooling water temperature TW falls within a temperature range (#TW2L: 80°C < TW < #TW2H: 85°C) for cooling of the hydraulic oil priority.

As explained above, according to the warming-up system for vehicle 1 of the present embodiment, the warming-up system for vehicle 1 is provided with the heat storage device 10 including the first chamber 15 in communication with the cooling water circuit 31, the second chamber 16 in which the heat storage medium 20 is arranged, and the third chamber 17 in communication with the hydraulic circuit 41. Thus, although they are provided separately heretofore, a heat storage device in which the heat storage medium is arranged and a heat exchanger for warming up the engine 30 or the automatic transmission 40 can be integrated into a single apparatus that has functions of both of them. Therefore, while it is possible to early warm up the engine 30 or the automatic transmission 40 and to immediately heat the inside of the vehicle, it is possible to simplify the configuration of the warming-up system 1 and to reduce the number of parts thereof, and it is possible to achieve miniaturization, cost saving of the vehicle. Thus, it is also possible to achieve compactification, weight saving, and cost saving of the vehicle.

Further, in the heat storage device 10 of FIG. 1, the second chamber 16 is adjacent to the third chamber 17, and the third chamber 17 is adjacent to the first chamber 15. Therefore, heat exchange can be carried out directly between the heat storage medium 20 and the hydraulic oil, and heat exchange can also be carried out directly between the hydraulic oil and the cooling water. Alternatively, in the heat storage device 10 of FIG. 4, the first chamber 15 is adjacent to the second chamber 16, and the second chamber 16 is adjacent to the third chamber 17. Therefore, heat exchange can be carried out directly between the cooling water and the heat storage medium 20, and heat exchange can also be carried out directly between the heat storage medium 20 and the hydraulic oil. According to these configurations, not only it is possible to effectively carry out warming-up of the engine 30 or the automatic transmission 40 using heat storage of the heat storage medium 20, but also it is possible to effectively carry out warming-up of a target apparatus further using heat generated in the engine 30 and the automatic transmission 40 each other. Therefore, it is possible to effectively utilize thermal energy generated in the vehicle.

Further, in this warming-up system 1, the heater core 45 of the heating apparatus 44 for heating the inside of the vehicle using heat of the cooling water is placed at the downstream side of the heat storage device 10 in the cooling water circuit 31. Thus, it is possible to carry out heating of the inside of the vehicle using the cooling water heated by the heat storage medium 20. Further, according to this warming-up system 1, it is possible to send the cooling water derived from the heat storage device 10 to the heating apparatus 44 in the cooling water circuit 31, and it is possible to send the hydraulic oil derived from the heat storage device 10 to the automatic transmission 40 in the hydraulic circuit 41. Therefore, by turning the switching valve 33 OFF in Mode 1 shown in FIG. 7, it is possible to carry out heating of the inside of the vehicle and warming-up of the automatic transmission 40 using the heat storage at the same time.

Moreover, the heat storage medium 20 included in the heat storage device 10 is a latent heat storage medium capable of heat storage at a supercooled state. Thus, it is possible to hold heat storage even though the outside temperature is lowered, and it is possible to hold the heat storage stably even though it has been left for a long time. Therefore, it is possible to simplify a heat-insulating structure of a container (the case 11, the intermediate member 12 and the partition member 13) for the heat storage medium 20, and it is possible to achieve simplification of the configuration, miniaturization, weight saving of the heat storage device 10. Further, release (nucleate) of the supercooled state by the nucleation device 25 allows the heat storage medium 20 to be heated at desired timing. Therefore, it is possible to carry out early warming-up of the engine 30 or the automatic transmission 40 or immediate heating of the inside of the vehicle more effectively.

<Second Embodiment>

Next, a warming-up system for vehicle according to a second embodiment of the present invention will be described. In this regard, in explanation for a second embodiment and corresponding drawings, the same reference numerals are assigned to components (constituent parts) similar to or corresponding to those in the first embodiment, and detailed explanation for the components is omitted below. Further, matter other than the matter that will be described below and matter shown in the drawings are similar to those in the first embodiment.

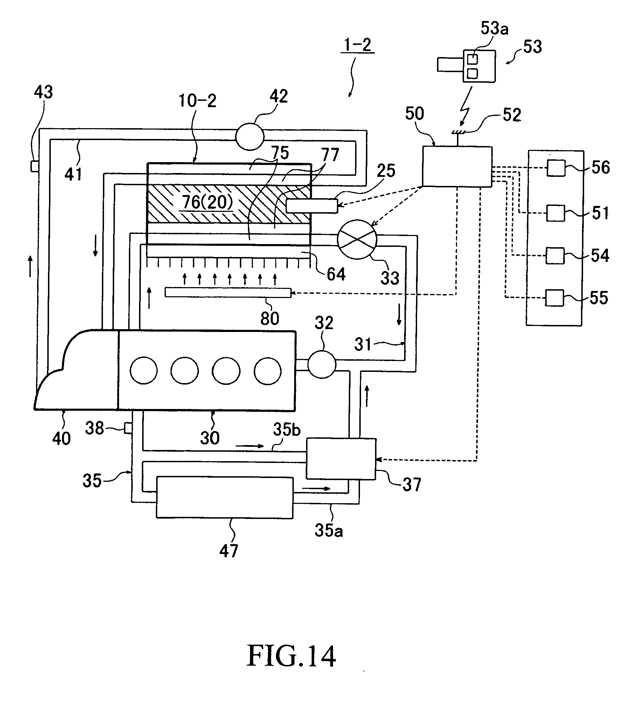

FIG. 14 is a schematic view showing a constituent example of a warming-up system for vehicle 1-2 of the second embodiment. In the first embodiment described above, the heater core 45 of the heating apparatus 44 has been placed at the downstream side of the heat storage device 10 in the cooling water circuit 31. However, in this second embodiment, another heat storage device 10-2 having a structure in which the heater core 45 and the heat storage device 10 in the first embodiment are combined is provided. In this regard, the heat storage device 10-2 has a structure wherein a hydraulic oil passage in which hydraulic oil for an automatic transmission 40 flows and a regenerator in which a heat storage medium 20 is arranged are integrally provided in a heater core section 64 in which cooling water for an engine 30 flows, will be described later.

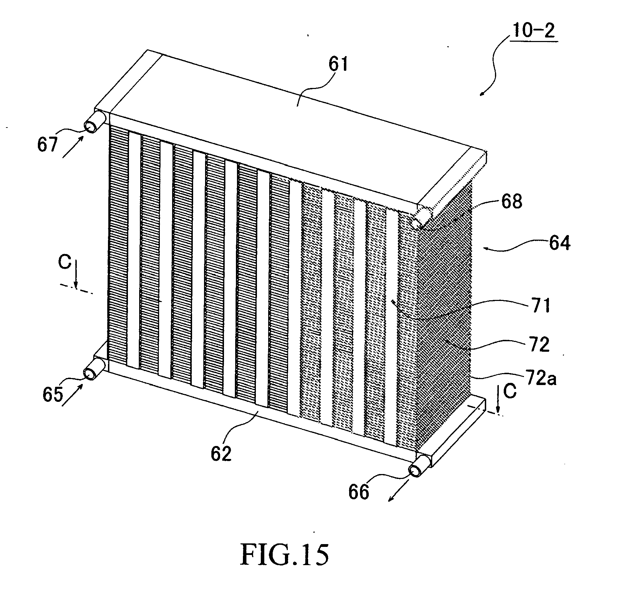

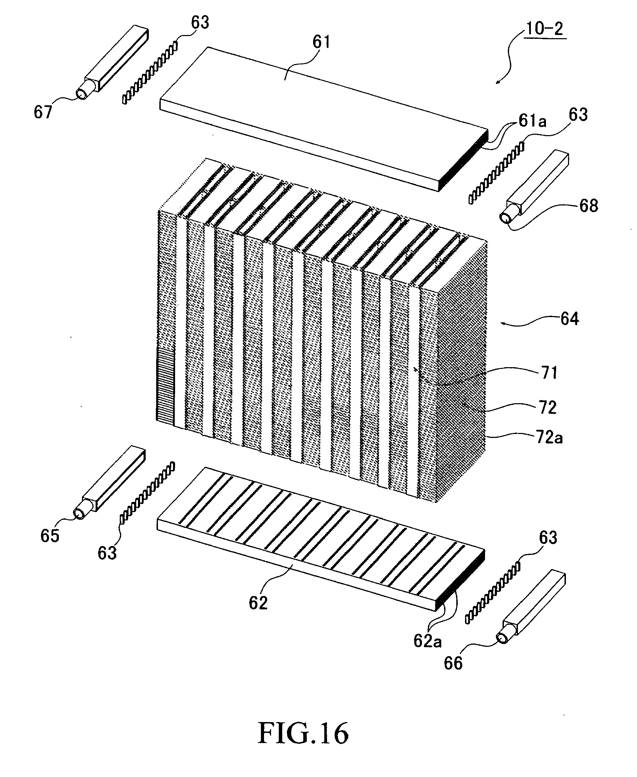

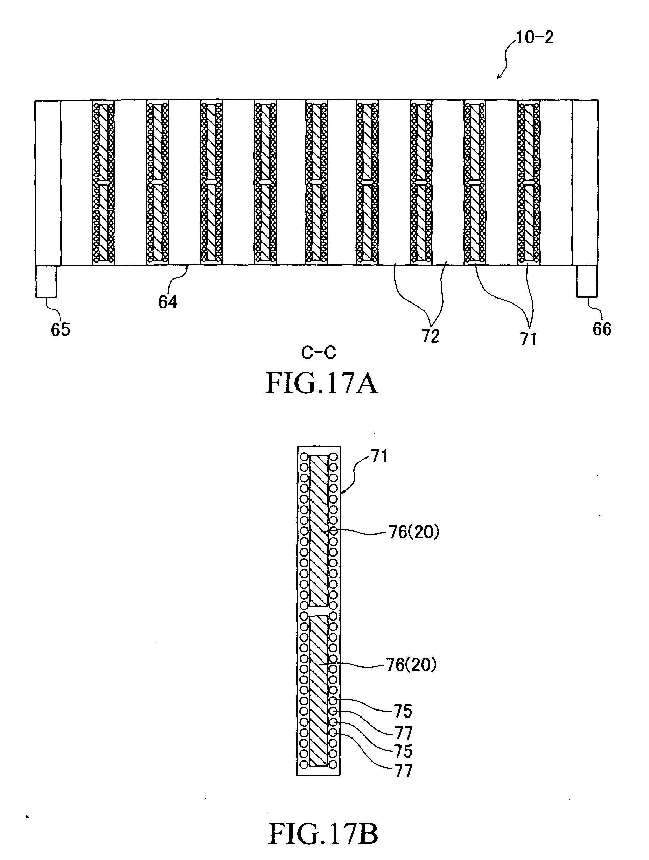

FIGS. 15 to 17 are views showing a detailed constituent example of the heat storage device 10-2. FIG. 15 is a perspective view thereof, FIG. 16 is an exploded perspective view thereof, FIG. 17A is a sectional view taken along the line C-C of FIG. 15, and FIG. 17B is a partially enlarged view of a heat exchange and heat storage tube 71 (will be described later). As shown in these drawings, in the heat storage device 10-2, a pair of heat exchanging tubes 61, 62 respectively including passages extending in a horizontal direction in which the cooling water and the hydraulic oil flow are provided at upper and lower portions. A heater core section 64 is provided between them. A heat exchange and heat storage tube 71 in which the heat storage medium 20 is housed is placed in the heater core section 64. As shown in FIG. 17B, in the heat exchange and heat storage tube 71, a chamber (second chamber) 76 in which the heat storage medium 20 is arranged is placed. A passage (first chamber) 75 in which the cooling water for the engine 30 flows and a passage (third chamber) 77 in which the hydraulic oil for the automatic transmission 40 flows are arranged around the second chamber 76 so as to surround it. Each of the first chamber 75 and the third chamber 77 is composed of a small channel extending in an up-and-down direction, and they are arranged alternately side by side along an outer circumference of the heat storage medium 20. Moreover, as shown in FIG. 15, a plurality of heat exchange and heat storage tubes 71 are placed so as to be arranged in a horizontal direction at predetermined intervals. A fin section 72 is provided between the adjacent heat exchange and heat storage tubes 71. A number of sheeted fins 72a are provided in the fin section 72. The fins 72a are arranged at predetermined intervals in an up-and-down direction of the fin section 72.

As shown in FIG. 16, passages 61a are provided in the heat exchanging tube 61 of the upper side. Both right and left ends of each of the passages 61a are opened. Openings in communication with a cooling water introduction section 67 at a left end and openings in communication with a hydraulic oil derivation section 68 at a right end are alternately covered with cover members 63. Thus, the passages 61a are arranged so as to be in communication with the cooling water introduction section 67 and the hydraulic oil derivation section 68 alternately. Similarly, passages 62a are provided in the heat exchanging tube 62 of the lower side. Both right and left ends of each of the passages 62a are opened. Openings in communication with a hydraulic oil introduction section 65 at a left end and openings in communication with a cooling water derivation section 66 at a right end are alternately covered with cover members 63. Thus, the passages 62a in the heat exchanging tube 62 at the lower side are arranged so as to be in communication with the hydraulic oil introduction section 65 and the cooling water derivation section 66 alternately. Of the passages 61a, 62a in the upper and lower heat exchanging tubes 61, 62, the passages in which the cooling water flows are in communication with the cooling water passage (first chamber) 75 in the heat exchange and heat storage tube 71, and the passages in which the hydraulic oil flows are in communication with the hydraulic oil passage (third chamber) 77 in the heat exchange and heat storage tube 71.

Thus, the cooling water is introduced from the cooling water introduction section 67 at the upper left side; passes through the passages 61a in the heat exchanging tube 61 at the upper side to proceed in a right direction; passes through the cooling water passage 75 in the heat exchange and heat storage tubes 71 to proceed downward; passes through the passages 62a in the heat exchanging tube 62 at the lower side to proceed in the right direction; and is derived from the cooling water derivation section 66 at the lower right side. On the other hand, the hydraulic oil is introduced from the hydraulic oil introduction section 65 at the lower left side; passes through the passages 62a in the heat exchanging tube 62 at the lower side to proceed in the right direction; proceeds upward in the hydraulic oil passages 77 of the heat exchange and heat storage tube 71; passes through the passages 61a in the heat exchanging tube 61 at the upper side; and is derived from the hydraulic oil derivation section 68 at the upper right side.

This heat storage device 10-2 is placed in an air induction duct (not shown in the drawings) facing the inside of the vehicle in the similar manner to the heater core 45 in the first embodiment. A blower fan 80 (see FIG. 14) for fanning the heater core section 64 (including the heat exchange and heat storage tube 71 and the fin section 72) of the heat storage device 10-2 is built into the air induction duct. A blower duct (see FIG. 14) in communication with the inside of the vehicle is provided at a blower downstream side of the heat storage device 10-2.

Since this heat storage device 10-2 includes configurations of the heat storage device 10 and the heater core 45 in the first embodiment so as to be integrated, it is possible to achieve reduction of the number of parts, miniaturization and weight saving of the device. Further, since the first chamber 75, the second chamber 76 and the third chamber 77 are arranged so as to be adjacent to each other, it is possible to directly heat both the cooling water and the hydraulic oil by means of the heat storage medium 20. In addition, since heat exchange can be carried out between the cooling water and the hydraulic oil, warming-up of the automatic transmission 40 using heat of the engine 30 can also be carried out effectively. Moreover, by sending air to the heat exchange and heat storage tube 71 by means of the blower fan 80, not only it is possible to carry out heating of the inside of the vehicle using heat of the cooling water or the hydraulic oil, but also it is possible to carry out in-vehicle heating directly using heat of the heat storage medium 20. Therefore, since in-vehicle heating can be carried out independent of temperature of the cooling water or the hydraulic oil, it is possible to carry out immediate heating of the inside of the vehicle effectively even before starting of the engine 30 or right after starting of the engine 30.

Although the embodiments of the present invention have been explained above, the present invention is not limited to the above embodiments. Various modifications can be made in a scope of the technical idea described in the following claims, the specification described above and the accompanying drawings without departing from the spirit and scope of the present invention. In this regard, even any shape, structure or material that is not described directly in the specification and the drawings falls within the technical idea of the present invention so long as the function and the effect of the present invention are achieved.

## Claims

1. A warming-up system (1) for vehicle comprising:
a heat storage device (10) having a heat storage element (20) composed of a latent heat storage medium that allows heat storage at a supercooled state and a release device (25) for releasing the supercooled state of the heat storage element (20);
an engine (30) and a transmission (40) for warming-up targets;
a cooling water circuit (31) for causing cooling water to circulate through the heat storage device (10), the cooling water-flowing into the engine (30); and
a hydraulic oil circuit (41) for causing hydraulic oil to circulate through the heat storage device (10), the hydraulic oil flowing into the transmission (40),
wherein the heat storage device (10) includes a first chamber (15, 75) in communication with the cooling water circuit (31), a second chamber (16, 76) in which the heat storage element (20) is arranged, and a third chamber (17, 77) in communication with the hydraulic oil circuit (41), and heat exchange can be carried out among the cooling water of the first chamber (15, 75), the heat storage element (20) of the second chamber (16, 76) and the hydraulic oil of the third chamber (17, 77), and
wherein a first mode in which the hydraulic oil is heated by heat exchanging between the heat storage element (20) of the second chamber (16, 76) and the hydraulic oil of the third chamber (17, 77) after releasing the supercooled state of the heat storage element (20) by the release device (25), a second mode in which the hydraulic oil is heated by heat exchanging between the cooling water of the first chamber (15, 75) and the hydraulic oil of the third chamber (17, 77) after warming-up of the engine (30) is completed, and a third mode in which the hydraulic oil is cooled by heat exchanging between the cooling water of the first chamber (15, 75) and the hydraulic oil of the third chamber (17, 77) after warming-up of the transmission (40) is completed are carried out.

2. The warming-up system (1) for vehicle as claimed in claim 1, further comprising:
a control section (50) for controlling a warming-up operation to the engine (30) and the transmission (40),
wherein the control section (50) determines whether warming-up for the engine (30) or the transmission (40) is required or not when the control section (50) receives an instruction of warming-up for the engine (30) or the transmission (40), and
wherein, in the case where warming-up is not required, the control section (50) prohibits or suppresses the warming-up operation to the engine (30) or the transmission (40).

3. The warming-up system (1) for vehicle as claimed in claim 2, wherein the control section (50) determines whether the warming-up for the engine (30) or the transmission (40) is required or not on the basis of at least one of temperature of the cooling water and temperature of the hydraulic oil.

4. The warming-up system (1) for vehicle as claimed in claim 1, further comprising:
an electric pump (42) for causing the first or second heat transfer medium to circulate, the electric pump (42) being installed in the first or second heat transfer medium circuit (31, 41);
a control section (50) for controlling a warming-up operation to the first or second warming-up target (30, 44, 40); and
a remotely instructing section (53) capable of remotely instructing the control section (50) from the outside of a vehicle,
wherein, when the control section (50) receives the instruction of warming-up for the first or second warming-up target (30, 44, 40) from the remotely instructing section (53), the control section (50) activates the electric pump (42) and causes the release device (25) to release the supercooled state of the heat storage element (20).

5. The warming-up system (1) for vehicle as claimed in claim 1, wherein in the heat storage device (10), the second chamber (16) is adjacent to the third chamber (17) and the third chamber (17) is adjacent to the first chamber (15).

6. The warming-up system (1) for vehicle as claimed in claim 1, wherein in the heat storage device (10), the first chamber (15) is adjacent to the second chamber (16) and the second chamber (16) is adjacent to the third chamber (17).

7. The warming-up system (1) for vehicle as claimed in claim 1, wherein a heater core (45) of a heating apparatus (44) for heating the inside of a vehicle using heat of the cooling water or the hydraulic oil is placed at a downstream side of the heat storage device (10) in the cooling water circuit (31) or the hydraulic oil circuit (41).

## Patentansprüche

1. Aufwärmsystem (1) für ein Fahrzeug, das aufweist:
eine Wärmespeichervorrichtung (10) mit einem Wärmespeicherelement (20), das aus einem Speichermedium für latente Wärme, das eine Wärmespeicherung in einem unterkühlten Zustand erlaubt, und eine Freisetzungsvorrichtung (25) zum Auflösen des unterkühlten Zustands des Wärmespeicherelements (20) besteht;
einen Motor (30) und ein Getriebe (40) zum Aufwärmen von Zielobjekten;
einen Kühlwasserkreis (31), um zu bewirken, dass Kühlwasser durch die Wärmespeichervorrichtung (10) zirkuliert, wobei das Kühlwasser in den Motor (30) strömt; und
einen Hydraulikölkreis (41), um zu bewirken, dass Hydrauliköl durch die Wärmespeichervorrichtung (10) zirkuliert, wobei das Hydrauliköl in das Getriebe (40) strömt,
wobei die Wärmespeichervorrichtung (10) eine erste Kammer (15, 75) in Verbindung mit dem Kühlwasserkreis (31), eine zweite Kammer (16, 76), in der das Wärmespeicherelement (20) angeordnet ist, und eine dritte Kammer (17, 77) in Verbindung mit dem Hydraulikölkreis (41) umfasst, wobei ein Wärmetausch zwischen dem Kühlwasser der ersten Kammer (15, 75), dem Wärmespeicherelement (20) der zweiten Kammer (16, 76) und dem Hydrauliköl der dritten Kammer (17,77) ausgeführt werden kann, und
wobei eine erste Betriebsart, in der das Hydrauliköl geheizt wird, indem Wärme zwischen dem Wärmespeicherelement (20) der zweiten Kammer (16, 76) und dem Hydrauliköl der dritten Kammer (17, 77) getauscht wird, nachdem der unterkühlte Zustand des Wärmespeicherelements (20) durch die Freisetzungsvorrichtung (25) aufgelöst wurde, eine zweite Betriebsart, in der das Hydrauliköl durch Tauschen von Wärme zwischen dem Kühlwasser der ersten Kammer (15, 75) und dem Hydrauliköl der dritten Kammer (17, 77) geheizt wird, nachdem das Aufwärmen des Motors (30) abgeschlossen ist, und
eine dritte Betriebsart, in der das Hydrauliköl durch Tauschen von Wärme zwischen dem Kühlwasser der ersten Kammer (15, 75) und dem Hydrauliköl der dritten Kammer (17, 77) gekühlt wird, nachdem das Aufwärmen des Getriebes (40) abgeschlossen ist, ausgeführt werden.

2. Aufwärmsystem (1) für ein Fahrzeug gemäß Anspruch 1, das ferner aufweist:
einen Steuerabschnitt (50) zum Steuern eines Aufwärmbetriebs des Motors (30) und des Getriebes (40),
wobei der Steuerabschnitt (50) bestimmt, ob das Aufwärmen für den Motor (30) oder das Getriebe (40) erforderlich ist oder nicht, wenn der Steuerabschnitt (50) eine Anweisung zum Aufwärmen für den Motor (30) oder das Getriebe (40) empfängt, und
wobei der Steuerabschnitt (50) in dem Fall, in dem das Aufwärmen nicht erforderlich ist, den Aufwärmbetrieb für den Motor (30) oder das Getriebe (40) unterbindet oder unterdrückt.

3. Aufwärmsystem (1) für ein Fahrzeug gemäß Anspruch 2, wobei der Steuerabschnitt (50) basierend auf der Temperatur des Kühlwassers und/oder der Temperatur des Hydrauliköls bestimmt, ob das Aufwärmen für den Motor (30) oder das Getriebe (40) erforderlich ist oder nicht.

4. Aufwärmsystem (1) für ein Fahrzeug gemäß Anspruch 1, das ferner aufweist:
eine elektrische Pumpe (42), um zu bewirken, dass das erste oder zweite Wärmeübertragungsmedium zirkuliert, wobei die elektrische Pumpe (42) in dem ersten oder zweiten Wärmeübertragungsmediumkreis (31, 42) installiert ist;
einen Steuerabschnitt (50) zum Steuern eines Aufwärmbetriebs für das erste oder zweite Aufwärmzielobjekt (30, 44, 40); und
einen Fernanweisungsabschnitt (53), der fähig ist, dem Steuerabschnitt (50) von außerhalb des Fahrzeugs fernab Anweisungen zu erteilen, wobei, der Steuerabschnitt (50) die elektrische Pumpe (42) aktiviert und bewirkt, dass die Freisetzungsvorrichtung (25) den unterkühlten Zustand des Wärmespeicherelements (20) auflöst, wenn der Steuerabschnitt (50) von dem Femanweisungsabschnitt (53) die Anweisung zum Aufwärmen des ersten oder zweiten Aufwärmzielobjekts (30, 44, 40) empfängt.

5. Aufwärmsystem (1) für ein Fahrzeug gemäß Anspruch 1, wobei in der Wärmespeichervorrichtung (10) die zweite Kammer (16) benachbart zu der dritten Kammer (17) ist und die dritte Kammer (17) benachbart zu der ersten Kammer (15) ist.

6. Aufwärmsystem (1) für ein Fahrzeug gemäß Anspruch 1, wobei in der Wärmespeichervorrichtung (10) die erste Kammer (15) benachbart zu der zweiten Kammer (16) ist und die zweite Kammer (16) benachbart zu der dritten Kammer (17) ist.

7. Aufwärmsystem (1) für ein Fahrzeug gemäß Anspruch 1, wobei ein Heizungskern (45) einer Heizvorrichtung (44) zum Heizen des Inneren eines Fahrzeugs unter Verwendung der Wärme des Kühlwassers oder des Hydrauliköls an einer flussabwärtigen Seite der Wärmespeichervorrichtung (10) in dem Kühlwasserkreis (31) oder dem Hydraulikölkreis (41) angeordnet ist.

## Revendications

1. Système de chauffage (1) pour véhicule comprenant :
un dispositif de stockage de chaleur (10) comportant un élément de stockage de chaleur (20) composé d'un milieu de stockage de chaleur latente qui permet un stockage de chaleur à un état superrefroidi et un dispositif de libération (25) pour libérer l'état superrefroidi de l'élément de stockage de chaleur (20) ;
un moteur (30) et une transmission (40) pour des cibles de chauffage ;
un circuit d'eau de refroidissement (31) pour amener l'eau de refroidissement à circuler à travers le dispositif de stockage de chaleur (10), l'eau de refroidissement s'écoulant dans le moteur (30) ; et
un circuit d'huile hydraulique (41) pour amener l'huile hydraulique à circuler à travers le dispositif de stockage de chaleur (10), l'huile hydraulique s'écoulant dans la transmission (40),
dans lequel le dispositif de stockage de chaleur (10) inclut une première chambre (15, 75) en communication avec le circuit d'eau de refroidissement (31), une deuxième chambre (16, 76) dans laquelle l'élément de stockage de chaleur (20) est agencé, et une troisième chambre (17, 77) en communication avec le circuit d'huile hydraulique (41), et un échange de chaleur peut être réalisé entre l'eau de refroidissement de la première chambre (15, 75), l'élément de stockage de chaleur (20) de la deuxième chambre (16, 76) et l'huile hydraulique de la troisième chambre (17, 77), et
dans lequel sont réalisés un premier mode dans lequel l'huile hydraulique est chauffée par un échange de chaleur entre l'élément de stockage de chaleur (20) de la deuxième chambre (16,76) et l'huile hydraulique de la troisième chambre (17, 77) après libération de l'état superrefroidi de l'élément de stockage de chaleur (20) par le dispositif de libération (25), un deuxième mode dans lequel l'huile hydraulique est chauffée par échange de chaleur entre l'eau de refroidissement de la première chambre (15, 75) et l'huile hydraulique de la troisième chambre (17, 77) après que le chauffage du moteur (30) a été achevé, et un troisième mode dans lequel l'huile hydraulique est refroidie par échange de chaleur entre l'eau de refroidissement de la première chambre (15, 75) et l'huile hydraulique de la troisième chambre (17, 77) après que le chauffage de la transmission (40) a été achevé.

2. Système de chauffage (1) pour véhicule selon la revendication 1, comprenant en outre :
une section de commande (50) pour commander une opération de chauffage du moteur (30) et de la transmission (40),
dans lequel la section de commande (50) détermine si le chauffage pour le moteur (30) ou la transmission (40) est requis ou non lorsque la section de commande (50) reçoit une instruction de chauffage du moteur (30) ou de la transmission (40), et
dans lequel, dans le cas où le chauffage n'est pas requis, la section de commande (50) prohibe ou supprime l'opération de chauffage du moteur (30) ou de la transmission (40).

3. Système de chauffage (1) pour véhicule selon la revendication 2, dans lequel la section de commande (50) détermine si le chauffage du moteur (30) ou de la transmission (40) est requis ou non d'après au moins un élément parmi la température de l'eau de refroidissement et la température de l'huile hydraulique.

4. Système de chauffage (1) pour véhicule selon la revendication 1, comprenant en outre :
une pompe électrique (42) pour amener le premier ou second milieu de transfert de chaleur à circuler, la pompe électrique (42) étant installée dans le premier ou second circuit de milieu de transfert de chaleur (31, 41) ;
une section de commande (50) pour commander une opération de chauffage de la première ou seconde cible de chauffage (30, 44, 40) ; et
une section d'instruction distante (53) capable d'adresser des instructions à distance à la section de commande (50) à partir de l'extérieur d'un véhicule,
dans lequel lorsque la section de commande (50) reçoit l'instruction de chauffage pour la première ou seconde cible de chauffage (30, 44, 40) de la section d'instruction à distance (53), la section de commande (50) active la pompe électrique (42) et amène le dispositif de libération (25) à libérer l'état superrefroidi de l'élément de stockage de chaleur (20).

5. Système de chauffage (1) pour véhicule selon la revendication 1, dans lequel dans le dispositif de stockage de chaleur (10), la deuxième chambre (16) est adjacente à la troisième chambre (17) et la troisième chambre (17) est adjacente à la première chambre (15).

6. Système de chauffage (1) pour véhicule selon la revendication 1, dans lequel dans le dispositif de stockage de chaleur (10), la première chambre (15) est adjacente à la deuxième chambre (16) et la deuxième chambre (16) est adjacente à la troisième chambre (17).

7. Système de chauffage (1) pour véhicule selon la revendication 1, dans lequel un radiateur de chauffage (45) d'un appareil de chauffage (44) pour chauffer l'intérieur d'un véhicule en utilisant la chaleur de l'eau de refroidissement ou de l'huile hydraulique est placé d'un côté aval du dispositif de stockage de chaleur (10) dans le circuit d'eau de refroidissement (31) ou le circuit d'huile hydraulique (41).
